# EUROPEAN PATENT SPECIFICATION

(11) **EP 1 968 390 B1**
(45) Date of publication and mention of the grant of the patent: **11.07.2018**
(21) Application number: 07700550.2
(22) Date of filing: 05.01.2007
(51) Int. Cl.: A23B 7/155, A23L 5/20, A23L 7/143, A23L 7/13, A23L 19/12, A23L 19/18, A21D 8/04

(54) **METHOD FOR REDUCING ASPARAGINE IN A FOOD MATERIAL**
VERFAHREN ZUR ASPARAGINREDUKTION IN EINEM NAHRUNGSMITTEL
METHODE DE REDUCTION PAR REFROIDISSEMENT DU NIVEAU D'ASPARAGINE DANS UNE DENREE ALIMENTAIRE

(30) Priority: 05.01.2006 US 756510 P
(43) Date of publication of application: 17.09.2008
(73) Proprietor: Kellogg Europe Trading Limited, Dublin 2 (IE)
(72) Inventor: CORRIGAN, Patrick Joseph, Glendale, Ohio 45246 (US)
(74) Representative: Cabinet Plasseraud
(86) International application number: PCT/IB2007/050043
(87) International publication number: WO 2007/077546

(56) References cited:
- WO-A-2004/026043
- WO-A-2004/032648
- WO-A-2005/082160
- WO-A-2005/096838
- WO-A-2006/128843
- WO-A2-2006/026278
- US-A1- 2004 101 607
- US-A1- 2004 265 429

## Description

### FIELD OF INVENTION

The present invention relates to methods for reducing asparagine in asparagine-containing food materials. The present invention also relates to methods for reducing acrylamide in food products.

### BACKGROUND OF THE INVENTION

Since the dawn of civilization, carbohydrate-containing foods have been a staple in man's diet. Today, carbohydrate-containing foods such as breads, breakfast cereals, biscuits, crackers, cookies, French fries, cooked starchy vegetables, taco shells, and snack foods are popularly consumed. Although such foods have been part of the human diet for countless years, researchers have only recently discovered that many of these foods contain acrylamide.

In April 2002, the Swedish National Food Administration and researchers from Stockholm University announced their findings that acrylamide, a potentially cancer-causing chemical, is formed in many types of cooked foods. Acrylamide has a carcinogenic potency in rats that is similar to that of other carcinogens in food, but for humans, the relative potency in food is not known. Only limited human population data are available for acrylamide and these provide no evidence of cancer risk from occupational exposure. (FAO/WHO Consultation on the Health Implications of Acrylamide in Food: Summary Report; Geneva, Switzerland, 25-27 June 2002.)

Although further research is needed to assess what health effects, if any, may result from human consumption of acrylamide at the levels commonly found in such foods, many consumers have voiced concern. Accordingly, methods for reducing the level of asparagine in asparagine-containing food materials and methods for reducing the level of acrylamide in asparagine-containing food products are desired.

WO2004026043 discloses a method for the reduction of acrylamide in food products by adding to a food material an enzyme capable of hydrolyzing the amide group of free asparagine.

### SUMMARY OF THE INVENTION

The invention is defined by the claims.

### BRIEF DESCRIPTION OF THE DRAWINGS

The following Detailed Description may be more fully understood in view of the drawings, in which:
FIG. 1 sets forth a proposed reaction mechanism by which acrylamide forms from asparagine and a carbonyl source (such as glucose). Each of R₁ and R₂ may be H, CH₃, CH₂OH, CH₂(CH₂)ₙCH₃, or any other component making up a reducing sugar; and n is any integer less than 10;
FIG. 2 sets forth a proposed reaction mechanism by which asparaginase reacts with asparagine to prevent the formation of acrylamide; and
FIG. 3A-D sets forth several photomicrographs of potato cells during various stages of the flake-making process.

### DETAILED DESCRIPTION OF THE INVENTION

As disclosed in detail in Zyzak et al, U.S. Application Serial No. 2004/0058046 A1 ('046) and Zyzak et al, U.S. Application Serial No. 2004/0101607 A1 ('607), asparagine, a naturally occurring amino acid found in virtually all living systems, can form acrylamide when heated. Thus, foods richer in asparagine, when heated, tend to contain higher levels of acrylamide; this is especially the case when asparagine-containing foods are heated in the presence of reducing sugars. Formation of acrylamide has also been found to be higher when foods are cooked to a lower final moisture content.

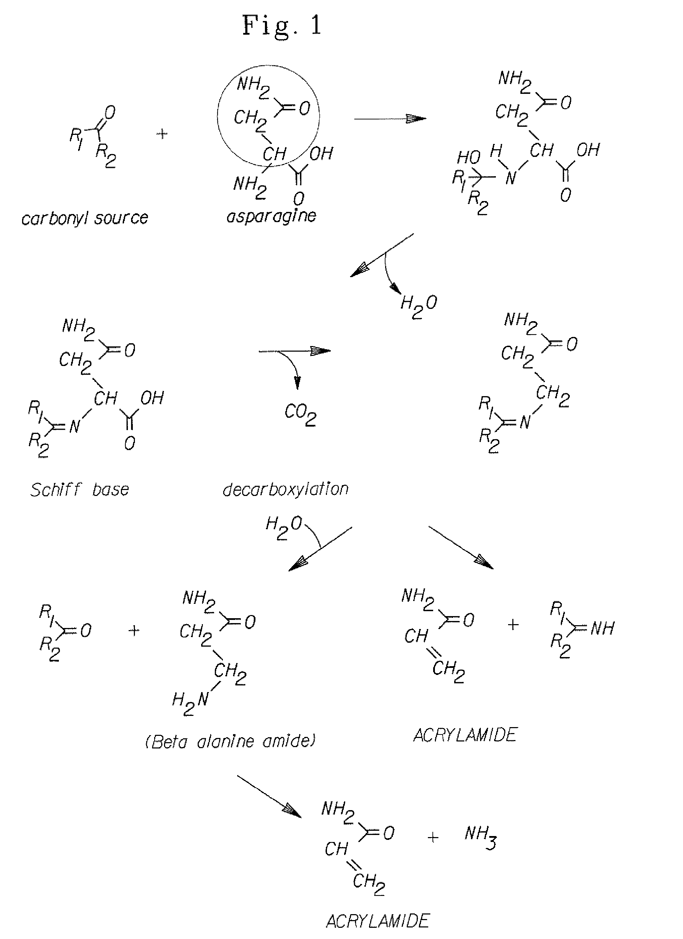

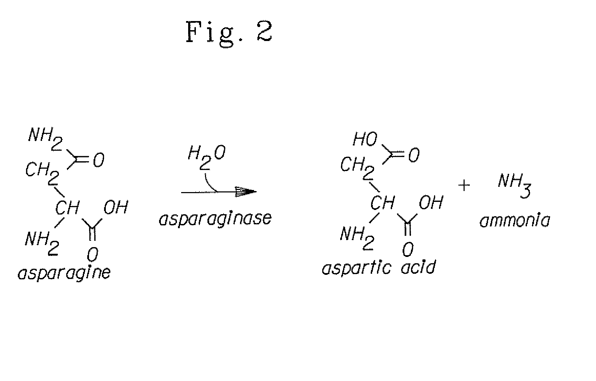

While not intending to be limited on theory, as disclosed in the '046 and the '607 applications, acrylamide is believed to be formed in food products via the reaction mechanism set forth in FIG. 1. This acrylamide formation in heated foods can be reduced by removing the asparagine or converting the asparagine in the food to another substance before cooking. When such foods containing reduced levels of asparagine are heated, the amount of acrylamide formed is reduced. Reducing the level of acrylamide in a finished food product may be accomplished by adding an enzyme that hydrolyzes the amide group on the side chain of asparagine prior to heating (e.g., cooking). The addition of such an enzyme degrades the side chain of asparagine, thus preventing the asparagine from forming acrylamide. In doing so, the amide bond is hydrolyzed and asparagine is converted to aspartic acid. This reaction mechanism is set forth in FIG. 2.

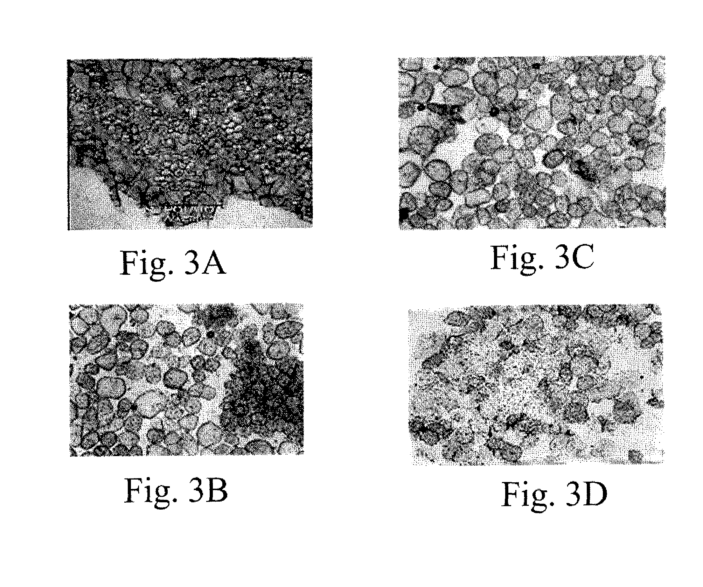

Applicant has found that until the tuber-based food material is heated, the asparagine cannot get out of the cells and the enzyme cannot get in because the cell wall is generally thick and not very permeable. As shown in the photomicrographs of Figure 3, potato cells after heating swell up to around 10 times their original size. More specifically, Figure 3A shows the cells of a raw tuber. Figure 3B shows those same cells after cooking and mashing, while Figure 3C shows the cells in the dough. Finally, Figure 3D illustrates the cells in the finished snack product. The swelling illustrated in Figures 3B and 3C causes the cell wall to be stretched and become much more permeable, thereby allowing freer flow of asparagine out of the cell to the enzyme and vice versa. Accordingly, Applicant has found that adding the enzyme after the asparagine-containing food material has been heated will greatly increase the levels by which asparagine and acrylamide may be reduced.

After heating, the asparagine-containing food material normally has a temperature of at least 70° C. Laboratory experiments indicate that the enzyme deactivates (becomes inactive) with increasing temperature. Below about 70° C, this deactivation is slow enough so that it can be used effectively to hydrolyze asparaginase in a reasonable food process. However above about 70° C, the enzyme deactivation increases rapidly due to temperature. Because of this deactivation, the concentration of enzyme in the food product decreases very rapidly after addition, making any enzyme treatment above about 70° C much less effective than below about 70° C. Increasing the initial enzyme concentration added to the food can help to a certain extent, but this very quickly can become cost prohibitive, and depending on the food product, even increased concentrations of added enzyme may not be effective if a longer enzyme contact time is required in that food. Above about 80° C the enzyme deactivates so rapidly that it is ineffective for hydrolyzing asparagine in food at any concentration. Therefore the asparagine-containing food material must be cooled to a temperature of less than 70° C before the enzyme is added to ensure that the enzyme maintains its enzymatic activity. Methods for reducing the level of asparagine in an asparagine-containing food material are described. The methods comprise (1) heating an asparagine-containing food material; (2) cooling the heated asparagine-containing food material to a temperature of less than about 70° C; and (3) adding an asparagine-reducing enzyme to the cooled asparagine-containing food material. The level of asparagine in the asparagine-containing food material is reduced.

As used herein "asparagine-containing food material" refers to any tuber-based and/or root-based edible material used in the preparation of a food product, including mixtures of two or more asparagine-containing food materials. The term asparagine-containing food material includes edible materials such as potato, wheat, corn, rye, coffee-based products. In fact most vegetables contain some asparagine. In one embodiment, the asparagine-containing food material comprise potatoes such as, but not limited, to Norchip, Norgold, Russet Burbank, Lady Rosetta, Norkotah, Sebago, Bintje, Aurora, Saturna, Kinnebec, Idaho Russet, Altura, Russet Norkotah, Atlantic, Shepody, Asterix, and Mentor.

The asparagine-containing food material, for example, potatoes, may be peeled, partially peeled or unpeeled and may be whole or sliced into pieces of any size before heating. In one embodiment, the asparagine-containing food material is cut into slices having an average thickness of about 1/4 inch to about 1/2 inch. The asparagine-containing food material is heated by exposure to steam to expand the cells and soften the asparagine-containing food material for mashing. Such cooking temperatures may range anywhere from about 70° C to about 200° C. The heated asparagine-containing food material may also be comminuted to produce a wet mash. Comminution of the cooked potatoes may be accomplished by any suitable means, such as but not limited to ricing, mashing, shredding or a combination thereof. Various methods for cooling a heated asparagine-containing food material to a temperature of less than 70° C are described. The heated asparagine-containing food material is cooled by a continuous process. A heated asparagine-containing food material may be cooled by passing the heated asparagine-containing food material through a pipe with a cooling jacket on the outside of the pipe. The asparagine-containing food material can be very efficiently cooled to a temperature of less than about 70° C in a very compact heat exchanger if, in addition to the cooling jacket on the outside of the pipe, cooling tubes are inserted in the interior of the pipe. The more tubes that are provided and the closer the tubes are arranged to one another, the faster the food material will cool, and the more compact the heat exchanger may be. The reason for this is that the Fourier number for heat transfer is inversely proportional to the thickness of the material to be cooled, squared, so that the smaller the thickness of material to be cooled, the faster the heat transfer. Inserting cooling tubes on the inside of the heat exchanger effectively reduces the thickness of the food material between cooling surfaces.

However, there comes a point where so many tubes have been added to the interior of the pipe that the flow rate of food material, for example, potato mash, through the pipe is greatly slowed down, and the pressure drop across the pipe as mash is pumped through becomes excessive for a conventional pump to move the food material. Therefore, one skilled in the art will can determine a suitable combination of cooling tubes and spacing inside the pipe with flow rate and pressure drop across the pipe. A suitable type of heat exchanger with a cooling jacket on the outside and cooling tube on the inside that is designed to minimize pressure drop is the SMR® heat exchanger, manufactured be Sulzer, Inc.

In one embodiment, the heated asparagine-containing food material is cooled in a hollow screw jacketed cooler. Examples of suitable hollow screw jacketed coolers, include, but are not limited to, a Nara® paddle cooler and a Thermascrew® cooler. A heated asparagine-containing food material may be cooled by a scraped wall heat exchanger. Examples of suitable scraped wall heat exchangers include, but are not limited to, those sold under the trademarks Votator®, Contherm® and Terlotherm®. In another embodiment, the heated asparagine-containing food material is cooled in a fluidized bed. This type of cooler can be configured for either batch or continuous operation. Examples of suitable fluidized bed coolers, include, but are not limited to, a Ventilex® fluidized bed cooler and a Buell MultiStage® fluidized bed cooler.

The methods discussed in detail above may generally be used for asparagine-containing food material, which are in a liquid or semi-solid form, such as a mash. However, the Applicant has also developed methods for cooling a heated asparagine-containing food material, which may be more suitable for a solid form. In yet another embodiment, the heated asparagine-containing food material is placed on a conveyor while air is blown over, under and/or around the asparagine-containing food material as it moves along the conveyor. This method of cooling offers the advantages of providing convective cooling from the air and evaporative cooling from the surface. Since evaporative cooling removes a substantial amount of thermal energy, this type of cooling can be very efficient. Once again, heat transfer will occur faster if the thickness of the material to be cooled is smaller, therefore conveyor length can be minimized by placing the asparagine-containing food material in a single layer on the conveyor.

Such methods may employ a straight conveyor, or if space is limited, a multiple level conveyer where the asparagine-containing food material travels along one level, then is passed to a second level, etc., in a zigzag pattern from level to level. An effective type of conveyor cooling system for cooling a heated asparagine-containing food material in a minimum amount of space is a vertical spiral cooler. In this type of cooler, the conveyor travels like the threads of a screw up (or down) a cylinder and air is blown over, under and/or around the asparagine-containing food material as the material travels along the conveyor. An example of a vertical spiral cooler for use for the present invention is manufactured by Spiral Systems, Inc.

Once the heated asparagine-containing food material has been cooled to a temperature of less than 70° C, an asparagine-reducing enzyme is added to the cooled asparagine-containing food material.

As used herein, "asparagine-reducing enzyme" includes any enzyme capable of reducing the level of asparagine in a food product. In one embodiment, the asparagine-reducing enzyme comprises an enzyme capable of hydrolyzing the amide group of free asparagine to prevent the formation of acrylamide. In another embodiment, the enzyme comprises deamidases that have asparagine-reducing functionality. In yet another embodiment, the enzyme for use herein is asparaginase. One source of asparaginase is Sigma-Aldrich, catalog #A2925, although other asparaginase products are commercially available and suitable for use herein. Asparaginase can be produced commercially from a process involving microorganisms that produce asparagine in their cells over the course of their growth. Typical microorganisms that can be used to produce asparaginase include, but are not limited to, E. coli., Aspargillus oryzae, and Aspargillus niger. As used herein, the terms "asparagine-reducing enzyme" and "enzyme" include one or more enzymes; for example, a mixture of two or more enzymes is encompassed by the terms.

As used herein, "adding" the enzyme to the asparagine-containing food material include, but is not limited to, any means of bringing the asparagine-containing food material and the enzyme together. The asparagine-reducing enzyme may be added to the cooled asparagine-containing food material in any suitable form. One skilled in the art will appreciate the various suitable forms for the enzyme, any of which may be employed herein. In one embodiment, the enzyme is added in the form of a powder. In another embodiment, the enzyme is added in the form of a solution. One skilled in the art will also appreciate that various methods may be used to add the enzyme to the cooled asparagine-containing food material, any of which may be employed herein. For example, the enzyme may be added directly or indirectly by sprinkling, pouring, mixing with or without the use of an agitator, kneading, spraying or combinations thereof. In one embodiment, the asparagine-reducing enzyme is added using an in-line mixer, a ribbon mixer a twin screw mixer or any combination of these.. Examples of suitable in-line mixers include, but are not, but are not limited to, those sold under the trademarks Sulzer®, Komax®, and Jongia®. In another embodiment the asparagine-reducing enzyme is added using a ribbon mixer. Examples of suitable ribbon mixers include, but are not, but are not limited to, those sold under the trademarks Ross® and Hayes & Stolz®. In another embodiment the asparagine-reducing enzyme is added using a screw mixer. The screw mixer may have one screw, or preferably multiple screws. Examples of suitable screw mixers include, but are not, but are not limited to, those sold under the trademarks Prater-Sterling ® and Readco®.

In one embodiment, Applicant has found that asparagine diffusion through a matrix is a strong function of the amount of free water (unbound water) in the food material. The amount of free (unbound water) in foods is commonly measured by a parameter known as water activity. Water activity (a_{w}) is a thermodynamic property of the food material that measures the ratio of free water in the food material vs. the total amount of water in the food material. Applicant has found that if the water activity is less than about 0.85 in a food material, the asparagine-reducing enzyme effectiveness will be very low. By contrast, if the a_{w} is greater than around 0.85, the asparagine-reducing enzyme effectiveness in hydrolyzing asparagine to aspartic acid is greatly increased, which in turn leads to a lower acrylamide level in the heated food product made from the treated food material.

One skilled in the art will further appreciate that the asparagine-reducing enzyme may be added to the asparagine-containing food material at any time after the food material reaches a temperature of less than 70° C. The asparagine-reducing enzyme is added to the asparagine-containing food material in the cooler. In yet another embodiment, the asparagine-reducing enzyme is added to the asparagine-containing food material while it is on a cooling conveyer.

Enzymes are marketed by units of activity, rather than by weight or volume. Thus, the effective amount of enzyme required to achieve the desired level of asparagine reduction in the asparagine-containing food material and acrylamide reduction in the finished asparagine-containing food product will depend upon the activity of the particular enzyme product used (for example, the particular enzyme's ability to degrade asparagine). The amount of enzyme to add can also depend upon the amount of asparagine present in the asparagine-containing food material; a food material higher in asparagine will generally require increased levels of enzyme or increased reaction time to achieve the same level of asparagine and acrylamide reduction. The amount of enzyme to add can also depend upon the particular asparagine-containing food material treated (e.g., chemical composition, amount of asparagine present, particle size, water activity, density, viscosity). One skilled in the art will be able to determine the effective amount of enzyme required based upon the specific asparagine-containing food material, the specific enzyme, the enzyme's specific activity and the desired result.

The asparagine-containing food material is mixed before, during and after the enzyme is provided. The amount of time needed, if any, for stirring the asparagine-containing food material will also depend upon factors including, but not limited to, the desired level of asparagine and/or acrylamide reduction, the level of asparagine in the food material, the particular enzyme added and/or the characteristics of the enzyme added. For a continuous system, this can be suitably done with an inline static mixer, or addition to the cooler after the point where the temperature of the food material has fallen below 70° C, since the cooling system will typically include some method of agitating the food product. In the case of, for example potato granules, which are typically mixed at one point in the process in a kneading mixer, the enzyme can be added to the granules after the point in the mixer where the temperature of the granules falls below 70° C. For potato granules the enzyme can also be added to the cooled slices or mashed product as mentioned earlier, either in combination with or alternatively to the addition to the kneading mixer. In one embodiment, the asparagine-containing food material is mixed from about10 seconds to about 30 minutes. In another embodiment, the asparagine-containing food material is mixed for about 1 minute. In another embodiment, the medium is mixed for about 5 minutes. In yet another embodiment, the asparagine-containing food material is mixed for about 10 minutes. In a further embodiment, the asparagine-containing food material is mixed for about 20 minutes.

A fluidized bed cooler can also be used to cool the product in continuous mode since fluidized bed coolers involve vigorous mixing of the fluidized materials inside. For a continuous operation, the enzyme can be added to the cooler at a point where the product temperature has fallen below about 70° C.

The amount of time needed to maintain the asparagine-containing food material with the asparagine-reducing enzyme under conditions sufficient to reduce the level of asparagine in the food material will depend upon factors including, but not limited to, the water activity and temperature of the asparagine-containing food material, the desired level of acrylamide reduction, the particular enzyme added and the amount of enzyme added. Shorter reaction times will typically require higher amounts of enzyme to achieve a desired reduction in acrylamide in the asparagine-containing food product such as potato crisps made with potato flakes where the potato mashuse to make the flakes has been treated with asparaginase, as shown in Table 1. Also, as shown in Table 1, the longer the enzyme is allowed to react, the greater the level of asparagine reduction and thus the greater the level of acrylamide reduction in a food product from the food material. In addition, the holding time may be effected in any suitable manner; for example, it can be carried out simultaneously with adding the enzyme to the asparagine-containing food material, mixing the enzyme with the asparagine-containing food material or combinations thereof.

In one embodiment, the enzyme and the food material are maintained from about 5 minutes to about 120 minutes under conditions sufficient to reduce the level of asparagine in the asparagine-containing food material to a desired level. In another embodiment, they are maintained for at least about 10 minutes. In yet another embodiment, they are maintained for about 40 minutes. In a further embodiment, they are maintained from about 60 minutes. In yet another embodiment, they are maintained for should 80 minutes. In a further embodiment, are maintained from about 100 minutes.

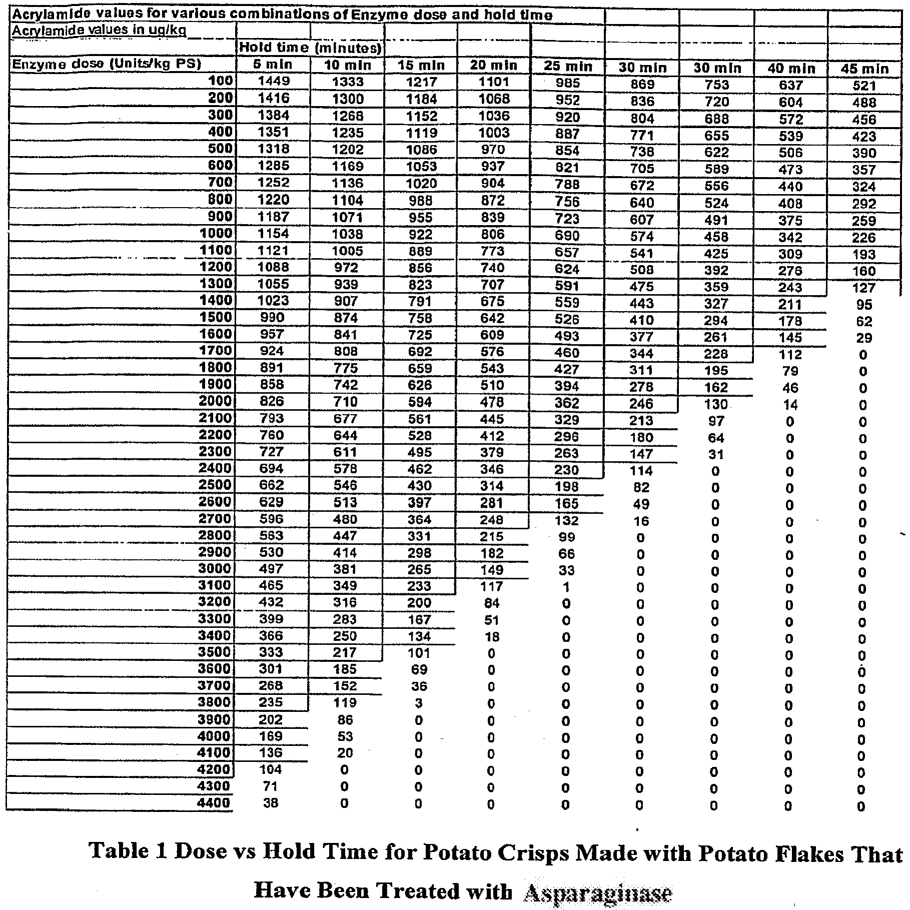

The level of asparagine reduction may be determined by measuring the amount of asparagine in the treated food material. One skilled in the art will appreciate the various methods for measuring the level of asparagine reduction, any of which may be employed herein. The level of asparagine reduction may be characterized as the percent reduction based on a comparison of the asparagine level with and without an asparagine-reducing enzyme treatment. In one embodiment, the level of asparagine is reduced by at least about 30%. In yet another embodiment, the level of asparagine is reduced by at least about 50%. In a further embodiment, the level of asparagine is reduced by at least about 70%. In yet a further embodiment, the enzyme is allowed to react until the level of asparagine is reduced by at least about 80%. In yet a further embodiment, the enzyme is allowed to react until the level of asparagine is reduced by at least about 90%. In yet a further embodiment, the enzyme is allowed to react until the level of asparagine is reduced by at least about 95%. In yet another embodiment, the level of asparagine is reduced by at least about 99%.

After the level of asparagine has been reduced to the desired level in the treated food material, the enzyme can optionally be inactivated and/or removed from the medium. The enzyme can be deactivated by any suitable means that inactivates the enzyme. For example, the enzyme can be deactivated through the use of heat, pH adjustment, treatment with a protease, or combinations thereof. Thus, deactivating the enzyme through heating, the optional deactivation step and the cooking step, as discussed in detail below, may be carried out simultaneously. Heat processing via cooking can also denature and inactivate the enzyme such that the food is not subjected to continuing enzymatic activity. Furthermore, the enzyme can be removed by any suitable means including, but not limited to, extraction. The Zyzak et al applications '046 and '607 discuss in detail the different methods for optionally inactivating and/or removing the enzyme from the asparagine-containing food material, any of which may be employed herein.

The present invention is directed to methods for reducing the level of acrylamide in a food product, as disclosed in the claims. The methods comprise (1) reducing the level of asparagine in a cooled asparagine-containing food material and (2) producing a food product from the treated food material.

As used herein, "food product" includes, but is not limited to, foods ready for consumption and foods to be used as ingredients to prepare other foods. Such products include, but are not limited to, mashed potatoes, potato patties, potato pancakes and potato snacks such as French fries, extruded French fries or other extruded shapes made from potato mash, potato sticks, and potato snack chips, wheat-based products such as bread, crackers, biscuits and cookies; rye-based products such as breads, crackers and crisp breads, corn based products such as tortillas, tortilla chips, extruded corn-based snacks and corn breads, coffees, and any vegetable product where it is desired to reduce the level of asparagine in the food. In addition, the food product may be of any suitable form, including, but not limited to mash, flake, granule, flanules, powder or combinations thereof.

The step of reducing the level of asparagine in an asparagine-containing food material is discussed in detail above and any of such methods may be employed herein. After the level of asparagine has been reduced to the desired level in the treated food material, the food product is produced.

One skilled in the art will appreciate the various additional components, which may be added to the treated food material before, during and/or after treatment with the enzyme, any of which may be employed herein. One skilled in the art will also appreciate the various methods for producing a food product from a treated food material, any of which may be employed herein. The treated food material may be heated in the usual manner known in the art, such as by baking, frying, extruding, drying (e.g., via vacuum oven or drum dryer), puffing or microwaving to form the asparagine-containing food product. Cooking can be performed by any suitable method, for instance by frying, baking, or a combination of frying or baking. Furthermore, the forming and cooking steps can be carried out simultaneously, such as with extruded snack products.

In one embodiment, the treated food material, a mash, is dried to form dehydrated potato products. These dehydrated potato products can be in any form, such as but not limited to flakes, flanules, granules, agglomerates, sheets, pieces, bits, flour or particulates. In one embodiment, the wet potato mash can be used to produce extruded fried potato products such as those described in U.S. Pat. No. 3,085,020, issued Apr. 9, 1963 to Backinger et al. Any suitable procedure, such as those known in the art, for producing such dehydrated potato products from a mash may be employed, and any suitable equipment may be used. The Zyzak et al applications '046 and '670 disclose in detail various processes for making such dehydrated potato products.

These dehydrated potato products, which have been sheeted and dried, may be further processed by breaking them into smaller sections. These smaller sections can be of any desired size. Any method of breaking the sheet that minimizes starch and potato cell damage, such as fracturing, grinding, breaking, cutting or pulverizing, can be used. For example, the sheet can be comminuted with an Urschel Comitrol™ manufactured by Urschel Laboratories, Inc. of Valparaiso, Ind., to break up the sheet. Alternatively, the sheet of flakes can be left intact.

These dehydrated potato products may also be used in the production of fabricated snacks, such as fabricated chips. Examples of such fabricated chips include those described in U.S. Pat. No. 3,998,975 issued Dec. 21, 1976 to Liepa, U.S. Pat. No. 5,464,642 issued Nov. 7, 1995 to Villagran et al., U.S. Pat. No. 5,464,643 issued Nov. 7, 1995 to Lodge, and WO 96/01572 published Jan. 25, 1996 by Dawes et al.

The dehydrated potato products can also be rehydrated and used to produce asparagine-containing food products such as mashed potatoes, potato patties, potato pancakes, and other potato snacks such as extruded French fries and potato sticks. For example, dehydrated potato products can be used to produce extruded French fried potato products such as those described in U.S. Pat. No. 3,085,020, issued Apr. 9, 1963 to Backinger et al., and U.S. Pat. No. 3,987,210, issued Oct. 18, 1976 to Cremer. The dehydrated potato products can also be used in breads, gravies, sauces, baby food, or any other suitable asparagine-containing food material-based food product.

The final amount of acrylamide in the food product may vary depending on the various factors set forth above. In one embodiment, the level of acrylamide in the food product is reduced by at least about 10%. In another embodiment, the level of acrylamide is reduced by at least about 30%. In yet another embodiment, the level of acrylamide is reduced by at least about 50%. In a further embodiment, the level of acrylamide is reduced by at least about 70%. In yet a further embodiment, the level of acrylamide is reduced by at least about 90%. In yet a further embodiment, the level of acrylamide is reduced by at least 95%. In yet a further embodiment, the level of acrylamide is reduced by at least about 99%.

The final amount of acrylamide in the food product may also be measured by parts per billion. In one embodiment, the level of acrylamide is reduced to less than about 100 ppb. In another embodiment, the level of acrylamide is reduced to less than 50 ppb. One skilled in the art will appreciate the various methods for measuring the reduction in the amount or the amount of acrylamide in a food product, any of which may be employed herein.

### Analytical Methods

Methods for measuring acrylamide (AA) in food products and the determination of asparagine and aspartic acid in food products are summarized in detail in Zyzak et al, US Patent Application No. 2004/0058046A.

### EXAMPLES (not according to the invention)

The following examples are illustrative of the present invention but are not meant to be limiting thereof.

### Example 1

### Equipment

Mettler AT250 Balance, Lab-Line Multi-Blok® block heater, heating block, 12 ml, 20 mm diameter, 47 mm tall glass vials with plastic snap-on caps, small spatulas, Cole-Parmer® Count Up/Down timers, Panasonic® NN-S563BF microwave oven, Chef's Choice model 630 meat slicer, asparagus steamer, potato ricer, Faberware® hand mixer, Pyromation® Dual J-T-E-K thermocouple thermometer with Omega®%SC-TT-K-36-36 precision fine wire thermocouples, and IKA Ultra Turrac® T18 Basic cell homgenizer

### Procedure

### 1. Make potato mash

i. Cut three medium Russet Burbank potatoes into ¼ inch slices using a meat slicer (to ensure even thickness of all slices).
ii. Steam the slices for 20 minutes in a steam cooker.
iii. Rice the cooked potato slices and then mix with a hand mixer for 1 minute.
iv. Put 4 grams of mash in each vial and cap each vial securely.

### 2. Add diluted asparaginase to mash medium

i. Place the vials of potato mash in a block heater and allow them to sit until the center temperature of each vial has equilibrated to the desired reaction temperature (e.g., 60° C). The temperature is measured by inserting a microthermocouple through the sealed cap down into the center of the mash.
ii. Make a solution of asparaginase and water by adding 14 microliters of A. oryzae asparagine solution (6800 units per milliliter of solution) and 5 grams of distilled water in a 20 ml beaker.
iii. Put 0.5 ml of the water-asparaginase solution prepared in the above step into a vial containing potato mash, and mix solution into mash for 30 seconds using a small spatula. At the end of mixing, cap the vial, place it back in the block heater, and start the timer. A separate timer will be needed for each vial.
iv. Allow the mash to sit for the scheduled amount of time (e.g., 2 minutes).
v. Heat the mash sample (in the vial) in the microwave oven for 8 seconds to heat it up to just below the boiling point of water. This will deactivate the enzyme.
vi. Place the vial in a freezer (-20° C) until ready to be analyzed for asparagine content.

### 3. Analytical Methods

i. Prep the mash sample by adding acid, homogenizing, and heating the sample according to the asparagine analytical method described above. During the preparation of the sample, the potato cells are destroyed to free asparagine and aspartic acid.
ii. Prep 4 known standards of asparagine/aspartic acid solution and add the internal standard to all samples.
iii. Dilute the samples and tag the asparagine and aspartic acid with a florescence marker.
iv. Load the samples and standards onto the liquid chromatograph (LC).
v. With the 4 known standards, make a calibration curve.
vi. Use the slope and intercept of known standards to standardize raw data of the samples.

### Experiment 1A

The above procedure is conducted, cooling the potato mash to 40 C. The asparagine concentration vs time data is shown below.

| Time after addition of asparaginase solution to the potato mash (minutes) | Asparaginase concentration (micrograms per kg potato mash) |
|---|---|
| 0 | 279.67 |
| 2 | 180.14 |
| 4 | 129.96 |
| 6 | 126.32 |
| 8 | 106.24 |
| 10 | 85.41 |

The asparagine concentration has been reduced by about 70%.

### Experiment 1B

The above procedure is conducted, cooling the potato mash to 50° C. The asparagine concentration vs time data is shown below.

| Time after addition of asparaginase solution to the potato mash (minutes) | Asparaginase concentration (micrograms per kg potato mash) |
|---|---|
| 0 | 422.98 |
| 2 | 198.77 |
| 4 | 174.85 |
| 6 | 136.93 |
| 10 | 134.2 |

The asparagine concentration has been reduced by about 70%.

### Experiment 1C

The above procedure is conducted, cooling the potato mash to 60° C. The asparagine concentration vs time data is shown below.

| Time after addition of asparaginase solution to the potato mash (minutes) | Asparaginase concentration (micrograms per kg potato mash) |
|---|---|
| 0 | 322.28 |
| 2 | 258.48 |
| 4 | 170.81 |
| 6 | 166.93 |
| 10 | 166.4 |

The asparagine concentration has been reduced by about 45%.

### Example 2

This example shows that a reduction of around 65% of the asparagine in the potato mash can lead to substantially lower levels of acrylamide in the finished cooked product.

### Make potato flakes

1. Set a constant temperature bath for 60° C.
2. Peel 3 medium Russet Burbank potatoes, and slice into 1/4 inch slices using a meat slicer.
3. Steam the potato slices in a steamer about 20 minutes.
4. Rice the steamed potatoes into a mixing bowl. Measure the temperature and ensure the temperature is about 60° C.
5. Mix in about 10 g water in about 368 g potato mash for one minute
6. Mix in about 10 g water plus about 15 microliters of A. oryzae asparagine solution (6800 units per milliliter of solution) per 368 g potato mash for one minute using the hand mixer. Measure and record the temperature.
7. Cover the bowl, place it in the constant temperature bath (60° C) for about15 minutes, then measure and record the temperature.
8. Re-rice the mash on a cookie sheet an immediately dry in a pizza oven until the product moisture is reduced to about 7%
9. Grind the dried product in a blender and sieve to 30 mesh.

The above procedure is repeated, except that no asparaginase is added to the potato mash. Two sets of flakes are now ready to be made into snack chips, one with asparaginase treatment and one without asparaginase treatment. The asparagine level in each set of potato flakes is measured.

### Make fried snack chips from the potato flakes

### Materials

Potato flakes, water, other dry ingredients and emulsifier

### Apparatus

Fryer with oil, Disposable gloves, balance, 400 ml beaker, 150 ml beaker, small spatula, food processor, disposable plates, aluminum foil, sheeting rolls, cutting board, doval cutting die, fryer mold and paper towels.

### Procedure

1. Fill fryer with oil to between min and max marks, if not already done. Set out 3 disposable plates with paper towels on them.
2. Turn on fryer power switch and set dial to 360° F.
3. Put 400 ml beaker on balance and tare.
4. Weigh out the dry materials (+ 0.02 g) in the 400 ml beaker.
5. Add the dry materials to the food processor. Put on cover and mix for 30 seconds.
6. Put 150 ml beaker on balance and tare.
7. Add water and emulsifier.
8. Put beaker with water and emulsifier in microwave oven and heat for 32 seconds.
9. With dry ingredients still in the processor simultaneously turn on the time and the food processor.
10. Add the warm water and emulsifier to the food processor through the chute.
11. Continue to mix 1:00 minute, then stop.
12. Take off the top cover of the food processor, and dump the crumbly dough onto a disposable plate. Take out the blade from the dough and set aside. Cover the dough with aluminum foil, and take to the sheeting rolls.
13. Dump the crumbly dough between the two rolls and run the dough through the rollers to form a sheet.
14. Fold up the sheet, set on a disposable plate, cover with foil and take to the cutting hoard.
15. Cut out 20 dovals from the sheet with the doval cutting on the cutting board. Place 2 in a small ziplock bag. (16 dovals need to be fried so there are 2 extra for mistakes.)
16. Cover the remaining dovals with foil and take to the fryer. Be sure to have gloves on by this time.
17. Lift the top of the fryer mold and place a doval in the center. Set the timer for 12 seconds.
18. Simultaneously start the timer, and lower the mold with the doval to the bottom of the fryer. When the timer beeps, immediately lift out the mold from the oil. Turn the mold sideways over the fryer to drain the bulk of the oil, then place it on a disposable plate with paper towels.
19. Lift up the top of the mold, take a small metal spatula, and pop out the fried chip. Set aside on a separate disposable plate with paper towels.
20. Repeat this procedure to make at least 16 fried chips.
21. Place the chips in a plastic bag. Put a label on the bag sample number.
22. Analyze the chips for acrylamide level.

**Correlation of asparagine reduction with acrylamide reduction in finished chips**

| | ppm asparagine in the potato flakes | % asparagine reduction in flakes | ppb acrylamide in finished chips | % acrylamide reduction in finished chips | % Moisture in finished chips |
|---|---|---|---|---|---|
| Control | 22008.85 | 0 | 5867 | 0 | 1.68 |
| 2850 U asparaginase per kg potato solids | 7570.82 | 65.6% | 246 | 95.8% | 1.67 |

While not being limited by theory, it is hypothesized that as asparagine is hydrolyzed, it forms aspartic acid, which is another amino acid that can (and will) participate in Maillard reactions with any available reducing sugar. This aspartic acid becomes in a strong competitor for using up the reducing sugar in the potato dough during frying. Since the ratio of aspartic acid to asparagine in the mash goes from about 1:10 before the reaction to about 2:1 at the end of the reaction the available reducing sugar is more likely to react with aspartic acid in the Maillard reaction and than with asparagine.

### Example 3

A 4-inch diameter, 2-foot long SMR heat exchanger unit is placed in a section of a surge pipe between a potato masher and a drum dryer for cooling a potato mash. Potato mash is made by mixing 95° C water with potato flakes (20 kg of flakes per 80 kg of water). The initial product inlet temperature to the SMR unit was about 93° C. In one method, the potato mash flow rate started at about 17 kg/min and then is lowered linearly to 8 kg/min after 15 minutes. In another method, the potato mash flow rate starts at about 5 kg/min and then is lowered linearly to 8 kg/min after 15 minutes. The SMR heat exchanger lowers the temperature of the mash to at least about 70° C. Asparaginase is then mixed into the mash in the surge pipe after the mash is cooled to 70° C. The mash then travels along the surge pipe to the dryer to produce a treated food material with a reduced level of asparagine.

### Example 4

Potato slices emerge from a cooker at about 95° C at a flow rate of about 7000 kg/hr. The slices are (on average) 0.7 cm thick and 5 cm in diameter. The slices are dumped from the cooker onto a conveyor belt of a vertical spiral evaporative cooler with an air blasting over the conveyer. Immediately after cooling, the slices are mashed, so any inhomogeneities in the slice temperatures either within the slice or among slices will be smoothed out. The slices at the end of the conveyor are dumped into a feeder box for the masher. An asparaginase solution is sprayed in the feeder box. The masher mashes the potatoes and mixes in the asparaginase. The mash then travels along the surge pipe to the dryer to produce a treated food material with a reduced level of asparagine.

### Example 5

Potato slices emerge from a cooker at about 99° C at a flow rate of about 1000 kg/hr. The slices are (on average) 0.7 cm thick and 5 cm in diameter. The slices are sent through a ricer to make a lumpy mash, then the mash is fed into a hopper which feeds into a Netzsch® progressive cavity pump. The Netzsch® pumps the mash into the bottom inlet of a Terlotherm® model T2 scraped wall heat exchanger. The mash exits the top of the scraped wall heat exchanger at about 60° C. The cooled mash then enters a Jongia® static mixer where it is mixed with an approximately 42 kg/hr asparaginase solution. The enzyme treated mash then enters a length of stainless steel pipe which travels to the distributor of a drum dryer. The length and diameter of the pipe are such that it takes about 15 minutes for the mash to travel from the exit of the static mixer to the distributor of the drum dryer. The drum dryer dries the mash in to a sheet of about 8% moisture. The sheet is peeled from the drum, broken up, and sent to a grinder for particle size reduction. The potato flakes from this process are sued to make fabricated potato crisps. Potato crisps are also made from potato flake made by the same process except that no asparaginase was added. The results are shown in Table 2 below.

| **Sample** | **Units of Aspara-ginase** | **Acrylamide in finished chips (ppb)** |
|---|---|---|
| Chips made with flakes through the enzyme process, but no enzyme, sample 5A | 0 | 1020 |
| Chips made with flakes, through the enzyme process, but no enzyme, sample 5B | 0 | 1060 |
| Chips made with flakes, through the enzyme process, 2500 Units asparaginase per kg potato solids, sample 5C | 2500 | 289 |
| Chips made with flakes, through the enzyme process, 2500 2500 Units asparaginase per kg potato solids, sample 5D | 2500 | 115 |
| Chips made with flakes, through the enzyme process, 2500 2500 Units asparaginase per kg potato solids, sample 5E | 2500 | 177 |
| Chips made with flakes, through the enzyme process, 2000 2500 Units asparaginase per kg potato solids, sample 5F | 2000 | 238 |

## Claims

1. A method for reducing the level of acrylamide in a food product based on an asparagine-containing food material wherein said food material comprises tuber-based food material, root-based food material or combinations thereof, comprising:
(1) cooking a asparagine-containing food material by exposure to steam;
(2) cooling the cooked asparagine-containing food material to a temperature of less than 70° C, wherein the asparagine-containing food material is cooled by a continuous process, wherein the continuous cooling process comprises cooling the asparagine-containing food material by a hollow screw jacketed trough cooler or continuous system comprises: (1) placing the asparagine-containing food material on a conveyer, and (2) blowing air on the asparagine-containing food material as it moves along the conveyer,
or wherein the asparagine-containing food material is cooled by a continuous process, wherein the continuous cooling process comprises cooling the asparagine-containing food material by a fluidized bed cooler or in a scraped wall heat exchanger;
(3) adding an asparagine-reducing enzyme to the cooled asparagine-containing food material after the cooled food material reaches a temperature of less than 70° C, wherein the level of asparagine in the asparagine-containing food material is reduced; and
(4) producing a food product from the treated food material wherein the asparagine-containing food material is mixed before, during and after the asparagine-reducing enzyme is added to the cooled asparagine-containing food material,
and wherein the asparagine-reducing enzyme is added to the asparagine-containing food material in the cooler.

2. The method of claim 1, wherein the asparagine-containing food material comprises tuber-based food material.

3. The method of any of claims 1-2, wherein the asparagine-reducing enzyme and the cooled asparagine-containing food are maintained from 5 to 120 minutes.

4. The method of any of claims 1-3, wherein the level of asparagine is reduced by at least 80%.

5. The method of any of claims 1-4, wherein the level of acrylamide is reduced to less than 100 ppb.

6. The method of any of claims 1-4, wherein the level of acrylamide is reduced to less than 50 ppb.

## Patentansprüche

1. Verfahren zum Verringern des Gehalts von Acrylamid in einem Nahrungsmittelprodukt, basierend auf einem Asparagin-enthaltenden Nahrungsmittelmaterial, worin das Nahrungsmittelmaterial Nahrungsmittelmaterial auf Knollenbasis, Nahrungsmittelmaterial auf Wurzelbasis oder Kombinationen davon umfasst, umfassend:
(1) Kochen eines Asparagin-enthaltenden Nahrungsmittelmaterials indem es Dampf ausgesetzt wird;
(2) Kühlen des gekochten Asparagin-enthaltenden Nahrungsmittelmaterials auf eine Temperatur von weniger als 70 °C,
worin das Asparagin-enthaltende Nahrungsmittelmaterial durch ein kontinuierliches Verfahren gekühlt wird, worin das kontinuierliche Kühlverfahren Kühlen des Asparagin-enthaltenden Nahrungsmittelmaterials durch eine ummantelte Hohlschschnecken-Kühlstrecke oder ein kontinuierliches Kühlsystem umfasst: (1) Anordnen des Asparagin-enthaltenden Nahrungsmittelmaterials auf einem Fördermittel und (2) Blasen von Luft auf das Asparagin-enthaltende Nahrungsmittelmaterial während es sich entlang des Fördermittels bewegt,
oder worin das Asparagin-enthaltende Nahrungsmittelmaterial durch ein kontinuierliches Verfahren gekühlt wird, worin das kontinuierliche Kühlverfahren Kühlen des Asparagin-enthaltenden Nahrungsmittelmaterials durch einen Fluidbettkühler oder in einem Kratzkühler umfasst;
(3) Zugeben eines Asparagin-verringernden Enzyms zu dem gekühlten Asparagin-enthaltenden Nahrungsmittelmaterial nachdem das gekühlte Nahrungsmittelmaterial eine Temperatur von weniger als 70 °C erreicht hat, wobei der Gehalt von Asparagin in dem Asparagin-enthaltenden Nahrungsmittelmaterial verringert wird; und
(4) Herstellen eines Nahrungsmittelprodukts aus dem behandelten Nahrungsmittelmaterial, worin das Asparagin-enthaltende Nahrungsmittelmaterial vor, während und nach der Zugabe des Asparagin-verringernden Enzyms zu dem gekühlten Asparagin-enthaltenden Nahrungsmittelmaterial zugemischt wird,
und worin das Asparagin-verringernde Enzym zu dem Asparagin-enthaltenden Nahrungsmittelmaterial in dem Kühler gegeben wird.

2. Verfahren nach Anspruch 1, worin das Asparagin-enthaltende Nahrungsmittelmaterial Nahrungsmittelmaterial auf Knollenbasis umfasst.

3. Verfahren nach einem der Ansprüche 1 - 2, worin das Asparagin-verringernde Enzym und das gekühlte Asparagin-enthaltende Nahrungsmittel von 5 bis 120 Minuten gehalten werden.

4. Verfahren nach einem der Ansprüche 1 - 3, worin der Gehalt von Asparagin um mindestens 80 % verringert wird.

5. Verfahren nach einem der Ansprüche 1 - 4, worin der Gehalt von Acrylamid auf weniger als 100 ppb verringert wird.

6. Verfahren nach einem der Ansprüche 1 - 4, worin der Gehalt von Acrylamid auf weniger als 50 ppb verringert wird.

## Revendications

1. Procédé de réduction du niveau d'acrylamide dans un produit alimentaire basé sur une matière alimentaire contenant de l'asparagine, dans lequel ladite matière alimentaire comprend une matière alimentaire à base de tubercule, une matière alimentaire à base de racine ou des combinaisons de celles-ci, comprenant :
(1) la cuisson d'une matière alimentaire contenant de l'asparagine par exposition à la vapeur ;
(2) le refroidissement de la matière alimentaire contenant de l'asparagine cuite à une température de moins de 70 °C,
dans lequel la matière alimentaire contenant de l'asparagine est refroidie par un processus continu, dans lequel le processus de refroidissement continu comprend le refroidissement de la matière alimentaire contenant de l'asparagine par un refroidisseur à cuve à double enveloppe à vis creuse ou le système continu comprend : (1) le placement de la matière alimentaire contenant de l'asparagine sur un convoyeur, et (2) le soufflage d'air sur la matière alimentaire contenant de l'asparagine à mesure qu'elle se déplace le long du convoyeur,
ou dans lequel la matière alimentaire contenant de l'asparagine est refroidie par un processus continu, dans lequel le processus de refroidissement continu comprend le refroidissement de la matière alimentaire contenant de l'asparagine par un refroidisseur à lit fluidisé ou dans un échangeur de chaleur à surface raclée ;
(3) l'ajout d'une enzyme réductrice d'asparagine à la matière alimentaire contenant de l'asparagine refroidie après que la matière alimentaire refroidie atteint une température de moins de 70 °C, dans lequel le niveau d'asparagine dans la matière alimentaire contenant de l'asparagine est réduit ; et
(4) la production d'un produit alimentaire à partir de la matière alimentaire traitée, dans lequel la matière alimentaire contenant de l'asparagine est mélangée avant, pendant et après ajout de l'enzyme réductrice d'asparagine à la matière alimentaire contenant de l'asparagine refroidie,
et dans lequel l'enzyme réductrice d'asparagine est ajoutée à la matière alimentaire contenant de l'asparagine dans le refroidisseur.

2. Procédé selon la revendication 1, dans lequel la matière alimentaire contenant de l'asparagine comprend une matière alimentaire à base de tubercule.

3. Procédé selon l'une quelconque des revendications 1 et 2, dans lequel l'enzyme réductrice d'asparagine et l'aliment contenant de l'asparagine refroidi sont maintenus de 5 à 120 minutes.

4. Procédé selon l'une quelconque des revendications 1 à 3, dans lequel le niveau d'asparagine est réduit d'au moins 80 %.

5. Procédé selon l'une quelconque des revendications 1 à 4, dans lequel le niveau d'acrylamide est réduit à moins de 100 ppM.

6. Procédé selon l'une quelconque des revendications 1 à 4, dans lequel le niveau d'acrylamide est réduit à moins de 50 ppM.
